# EUROPÄISCHE PATENTSCHRIFT

(11) **EP 1 344 949 B1**
(45) Veröffentlichungstag und Bekanntmachung des Hinweises auf die Patenterteilung: **11.04.2007**
(21) Anmeldenummer: 03000122.6
(22) Anmeldetag: 03.01.2003
(51) Int. Cl.: F15B 21/04, F15B 20/00, F15B 15/20, F15B 11/042, F15B 11/044, F16D 48/02, F15B 11/08

(54) **Ventileinrichtung für Stellzylinder**
Valve arrangement for a positioning cylinder
Agencement de soupape pour un vérin

(30) Priorität: 12.03.2002 DE 10210877
(43) Veröffentlichungstag der Anmeldung: 17.09.2003
(73) Patentinhaber: WABCO GmbH, 30453 Hannover (DE)
(72) Erfinder: Lissel, Norbert, 30890 Barsinghausen (DE); Teichmann, Andreas, 30916 Isernhagen HB (DE)
(74) Vertreter: Schrödter, Manfred

(56) Entgegenhaltungen:
- EP-A- 0 512 690
- CH-A- 415 306

## Beschreibung

Die Erfindung betrifft eine Ventileinrichtung für einen Stellzylinder, der vorzugsweise zur elektronisch-pneumatischen Betätigung der Kupplung eines Kraftfahrzeugs verwendet wird.

Aus dem Stand der Technik sind einfach wirkende, pneumatische Stellzylinder bekannt, bei denen der pneumatische Kolben über eine Rückstellfeder in seine Ausgangslage [Nullstellung der am Kolben befestigten Kolbenstange] versetzt wird. Bei diesen federbelasteten Stellzylindern stellt sich eine bestimmte Betätigungsstellung aufgrund des im Kolbenraum des Stellzylinders herschenden pneumatischen Drucks ein, d. h. die Kolbenstange des Stellzylinders ist um eine bestimmte Wegdifferenz gegenüber ihrer Nullstellung ausgefahren. Der Luftdruck im Stellzylinder-Kolbenraum bestimmt die Lage der Stellzylinder-Kolbenstange; zum Einfahren in Richtung der Nullstellung wird dieser abgesenkt und zum Ausfahren in Richtung ihrer, durch die Zylinderlänge bestimmten, Maximalstellung wird der Luftdruck angehoben.

Der Luftdruck im Stellzylinder-Kolbenraum wird mit Hilfe von Ventilen verändert, wobei im einfachsten Fall zur Luftdruckerhöhung ein schaltendes Belüftungsventil und zur Luftdruckverringerung ein schaltendes Entlüftungsventil vorgesehen sind.

Für die eingangs erwähnte Anwendung des Stellzylinders als elektronisch-pneumatisch betätigter Kupplungs-Stellzylinder sind das Belüftungs- und das Entlüftungsventil als elektrisch geschaltete Ventile ausgebildet, und mit dem Schalten dieser Ventile wird der Luftdruck im Stellzylinder-Kolbenraum in der gewünschten Weise verändert. Zur Feindosierung eines bestimmten Drucks, oder zur Realisierung eines bestimmten Druckgradienten, z. B. beim Einkuppelvorgang, werden die Ventile in taktendem Betrieb betätigt.

Der Stellzylinder ist mit der Fahrzeugkupplung [Ausführung in gedrückter oder gezogener Kupplungs-Bauart] derart verbunden, daß die Fahrzeugkupplung in der bei einem Kolbenraum-Druck von Null gegebenen Kolbenstangen-Nullstellung vollständig ausgerückt ist. Bei einer Erhöhung des Kolbenraum-Drucks fährt die Kolbenstange dann aus, bei einer bestimmten Kolbenstangen-Stellung [Kupplungs-Druckpunkt] beginnt das Einrücken, und beginnend mit einer weiteren bestimmten Stellung ist die Kupplung dann vollständig eingerückt.

In der Nullstellung der Stellzylinder-Kolbenstange, bei der, wie erläutert, die Zylinder-Kolbenkammer drucklos ist und ansonsten sich beide Ventile im nicht geschaltetem Zustand befinden, kann es jedoch vorkommen, daß es zu einem schleichenden Druckaufbau im Stellzylinder-Kolbenraum kommt, der durch kleine Leckagen in dem mit dem Versorgungsdruck verbundenen Belüftungsventil verursacht wird.

Mit diesem Druckaufbau kann es dann zu einem unerwünschten Ausfahren der Stellzylinder-Kolbenstange aus der Nullstellung kommen, und damit besteht die Gefahr des ungewollten Einrückens der Fahrzeugkupplung - d. h. das Fahrzeug kann sich u. U. selbständig in Bewegung setzen.

Natürlich kann ein derartiger unerwünschter Druckaufbau durch gelegentliches Betätigen des Entlüftungsventils unterbunden werden; dies würde jedoch einen zusätzlichen Algorithmus in der Steuerelektronik erfordern, der gegebenenfalls nicht konsistent mit dem Algorithmus zur Durchführung der gewünschten Ventil-Schaltvorgänge ist, und der auch z. B. die Verwendung einer möglicherweise für andere Zwecke nicht benötigten Drucksensierung erforderlich macht, weshalb dieser Lösungsweg unvorteilhaft ist. Außerdem müßte das System dann ständig bestromt werden [Stromverbrauch, Batterieentladung].

Aus der EP 0 512 690 A1 ist ein Steuersystem für eine hydraulisch betätigte Kupplung bekannt, wobei der hydraulische Betätigungsdruck durch einen mit Druckluft beaufschlagbaren Stellzylinder erzeugt wird. Der Stellzylinder weist einen Kolbenraum auf, der über eine pneumatische Ventileinrichtung mit stromlos geschlossenen Ventilen mit Druckluft belüftet und entlüftet werden kann.

Der Erfindung liegt also die Aufgabe zugrunde, eine Ventileinrichtung anzugeben, bei der leichte Leckagen im Belüftungsventil nicht zum Ausfahren der Stellzylinder-Kolbenstange führen, ohne daß hierfür zusätzliche Software-Algorithmen erforderlich sind.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Diverse Weiterbildugen der Erfindung haben den Vorteil, daß das erfindungsgemäße, besonders ausgestaltete Rückschlagventil als kleinbauendes Zusatzbauteil in ohnehin vorhandene Einrichtungen integriert werden kann, wodurch zusätzliche Montage- und Verrohrungskosten entfallen.

Die Erfindung wird im folgenden anhand eines Ausführungsbeispiels, das in den Zeichnungen dargestellt ist, näher erläutert.

Es zeigen:
- Fig. 1: das Schaltschema der pneumatischen Ventile für die Druckluftbeaufschlagung des federbelasteten Stellzylinders mit dem erfindungsgemäßen Rückschlagventil;
- Fig. 1a: das erfindungsgemäße Rückschlagventil in vergrößerter Darstellung;
- Fig. 1b: einen Schnitt durch die Darstellung nach Fig. 1a;
- Fig. 2: die Anordnung des erfindungsgemäßen Rückschlagventils im Kolben des federbelasteten Stellzylinders;
- Fig. 3: die Anordnung des erfindungsgemäßen Rückschlagventils im Gehäuse des federbelasteten Stellzylinders;
- Fig. 4: die Anordnung des erfindungsgemäßen Rückschlagventils im Entlüftungsventil für den federbelasteten Stellzylinder;
- Fig. 5: das erfindungsgemäße Rückschlagventil in einer zu Fig. 1 alternativen Ausführungsform.

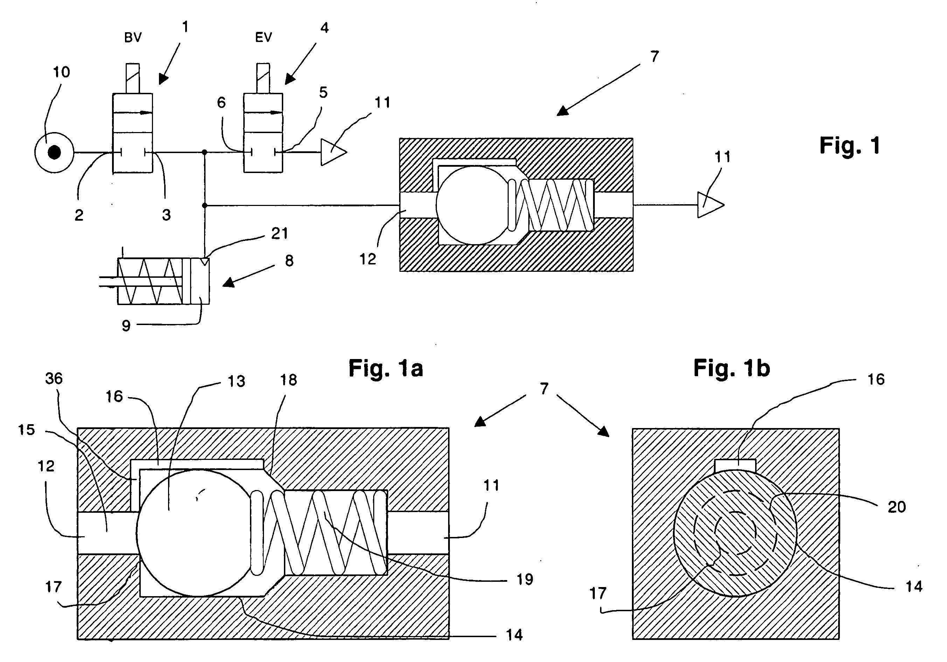

Die Ventilanordnung nach Fig. 1 eignet sich neben der eingangs erläuterten Anwendung, bei der der federbelastete Stellzylinder als Betätigungszylinder für eine Fahrzeugkupplung ausgebildet ist, für alle Anwendungen, bei denen ein schleichender Druckaufbau im Kolbenraum des federbelasteten Stellzylinders, der durch Ventil-Undichtigkeiten verursacht ist, zur unerwünschten Betätigung des Stellzylinders führen kann.

Fig. 1 zeigt ein Belüftungsventil (1), dessen erster Anschluß (2) mit dem Versorgungsdruck (10) und dessen zweiter Anschluß (3) mit dem Kolbenraum (9) des federbelasteten Stellzylinders (8) verbunden ist; weiter ist ein Entlüftungsventil (4) vorgesehen, dessen erster Anschluß (5) mit der Entlüftung (11) und dessen zweiter Anschluß (6) ebenfalls mit dem Stellzylinder-Kolbenraum (9) verbunden ist. Die Magnetventile (1) und (4) verfügen über 2/2-Wege, was die geringstmögliche Anzahl von Wegen für derartige Stellventile darstellt; für diese Ventile können also auch mehr als 2/2-Wege vorgesehen sein.

Die magnetbetätigten Ventile (1) und (4) werden über eine nicht dargestellte elektronische Steuereinrichtung geschaltet; um einen Druck im Stellzylinder-Kolbenraum (9) genau einzustellen, wie dies z. B. im Verlauf eines Kupplungs-Einrückungsvorganges bei der eingangs erwähnten Anwendung des Stellzylinders (8) als Kupplungs-Stellzylinder geschieht, können die Ventile in taktender Weise geschaltet werden. Für eine derartige Anwendung kann es auch vorteilhaft sein, je ein weiteres Belüftungsventil und Entlüftungsventil mit z. B. größeren Nennweiten für sowohl Schnell-Belüftungs- als auch Schnell-Entlüftungs-Vorgänge vorzusehen. Derartige Ventile sind außer der veränderten Nennweite gleichartig zu den gezeigten Ventilen (1) und (4) aufgebaut und sind parallel zu diesen geschaltet.

Bei einer derartigen paarweisen Anordnung kann also durch entsprechende Ventilbetätigung wahlweise ein schneller oder langsamer Druck-Aufbau wie Druck-Abbau erfolgen.

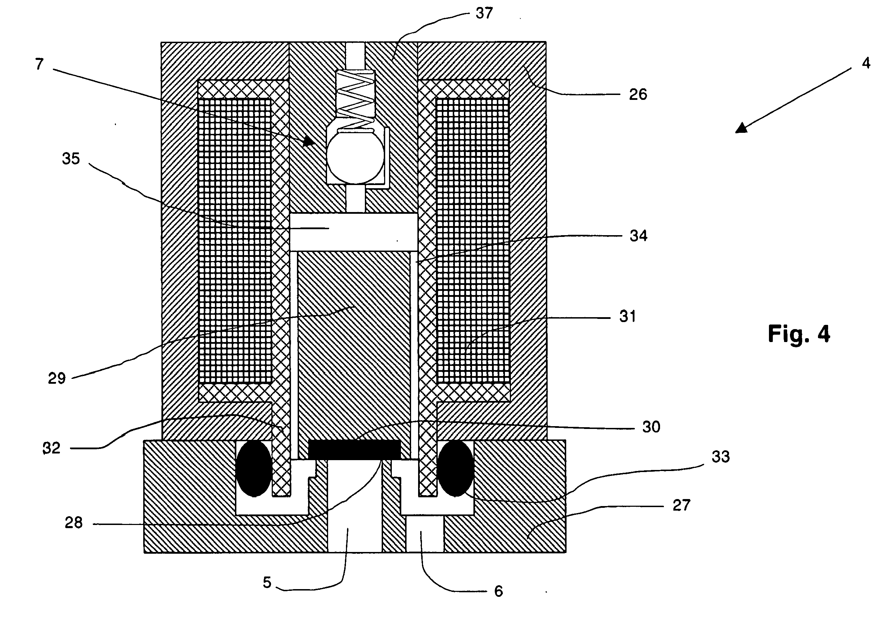

Bei einer Undichtigkeit des Belüftungsventils (1) [vgl. hierzu den unten im Zusammenhang mit Fig. 4 erläuterten, über das Magnetanker-Dichtelement (30) realisierten, Dichtsitz (28) des Entlüftungsventils (4) - das zum Belüftungsventil (1) identisch aufgebaut ist] gelangt Luft von der Versorgung (10) zum Stellzylinder-Kolbenraum (9). Die Luftmenge ist zwar vergleichsweise sehr gering, aber über längere Zeit kann sich doch, wie ebenfalls eingangs erläutert, im Kolbenraum (9) ein Druck aufbauen, der dann zum Schalten des Stellzylinders (8) führen kann.

Zur Verhinderung eines derartigen Druckaufbaus ist der Stellzylinder-Kolbenraum pneumatisch mit dem Eingang (12) des bereits erwähnten erfindungsgemäßen Rückschlagventils (7) verbunden.

Das Rückschlagventil (7) hat zwei Schaltstellungen: Eine erste, unbetätigte Stellung ist bei drucklosem pneumatischen Eingang (12) eingenommen; hier ist entsprechend Fig. 1a eine Dicht-Kugel (13) über die Kraft einer Feder (19) an einen ersten Dichtsitz (17) am pneumatischen Eingang (12) angelegt. In dieser Stellung verfügt das Rückschlagventil über eine definierte Undichtigkeit; es ist eine Nut vorgesehen, die aus einem Nut-Radialabschnitt (36) und einem Nut-Längsabschnitt (16) besteht, die in der Schnittdarstellung nach Fig. 1b [die Schnittebene geht durch die Mitte der Dicht-Kugel (13)] in ihrem Querschnitt gezeigt ist, und über die eine kleine Luftöffnung zur Entlüftung (11) gebildet wird. Die Dicht-Kugel ist in einer kreiszylindrischen Führung (14) gelagert, und die Nut (16) in der kreiszylindrischen Führung (14) erstreckt sich somit bis zur Bohrung (15) am pneumatischen Eingang (12).

Die zweite Stellung des Rückschlagventils (7), die betätigte Stellung, ist bei druckbeaufschlagtem pneumatischen Eingang (12) gegeben; durch den am pneumatischen Eingang (12) anliegenden Druck kann sich durch die nur vergleichsweise kleine Undichtigkeit ein Staudruck ausbilden, der die Dicht-Kugel (13) an den zweiten Dichtsitz (18) dichtend anlegt, so daß der Eingang (12) von der Entlüftung (11) pneumatisch abgesperrt ist.

Die definierte Undichtigkeit des Rückschlagventils (7) in seiner ersten Stellung wird durch den Querschnitt der Nut (36, 16) [vgl. Fig. 1b] bestimmt; hierdurch ergibt sich eine Undichtigkeits-Nennweite [z. B. 0,3 mm].

Bei der Auslegung der einzelnen Ventile ist diese Undichtigkeits-Nennweite auf die Nennweiten der anderen Ventile, vor allem des Belüftungsventiles, abzustimmen. Wichtig ist, daß diese Undichtigkeits-Nennweite klein gegenüber der Nennweite des Belüftungsventils ist [im Falle von zwei Belüftungs-Ventilen ist die Nennweite des Belüftungsventils mit größerem Querschnitt maßgebend für die Undichtigkeit, da ein größerer Dichtsitz auch größere Undichtigkeiten aufweist]: Beim Öffnen des Belüftungsventils bildet sich dann am Eingang (12) des Rückschlagventils sofort ein Staudruck aus, der die Dicht-Kugel (13) gegen die Kraft der Feder (19) auf den zweiten Dichtsitz (18) preßt und diesen abschließt.

Zum Vergleich mit dem erfindungsgemäßen Rückschlagventil (7) sei hier ergänzend auf die Bauweise eines üblichen Rückschlagventils eingegangen:
In ihrer üblichen Form dienen Rückschlagventile dazu, den Luftstrom in einer Strömungsrichtung zu sperren und in der anderen Strömungsrichtung freizugeben.
In einer Bauart entsprechend dem erfindungsgemä-ßen Rückschlagventil (7) als Kugelrückschlagventil würde bei einem üblichen Rückschlagventil die Dicht-Kugel über eine Feder gegen einen Dichtsitz am Eingang gepreßt. Dieser Dichtsitz ist für die Strömungsrichtung der Luft vom Eingang aus geöffnet, weil bei dieser Strömungsrichtung die Dicht-Kugel vom Ventilsitz abhebt; der Dichtsitz bleibt aber für die Strömungsrichtung der Luft entgegen dem Eingang abgeschlossen.
Im Vergleich zu diesem Rückschlagventil üblicher Bauart weist jedoch das erfindungsgemäße Rückschlagventil (7) eine veränderte Funktionsweise auf: Bei sehr geringen Staudrücken am Eingang (12) ist das Ventil mit sehr kleiner Nennweite geöffnet, so daß ein kleiner Durchlaß-Luftstrom fließt; schon bei "normal" kleinem Staudruck wird jedoch sofort der zweite Dichtsitz (18) eingenommen, wodurch das Ventil abgeschlossen ist. Die Feder (19) ist also mit einer vergleichsweise schwachen Federkonstante derart ausgelegt, daß die zweite Dichtsitz-Stellung schon bei einem hierfür gewünschten hinreichend geringen Staudruck von z. B. 0,2 bar auch gleich eingenommen wird.
Die bei einem Rückschlagventil üblicher Bauart erfolgende Sperrung eines Luftstroms in einer Richtung entgegen zum Eingang ist für das erfindungsgemäße Rückschlagventil (7) dagegen ohne Bedeutung.

Da bei der gezeigten Schaltung nach Fig. 1 der Eingang (12) des Rückschlagventils mit dem Druckluftanschluß (21) des Stellzylinder-Kolbenraums (9), dem zweiten Anschluß (3) des Belüftungsventils (1) und dem zweiten Anschluß (6) des Entlüftungsventils (4) pneumatisch verbunden ist, läßt sich das Rückschlagventil (7) auch an einer anderen Stelle, als in Fig. 1 gezeigt, unterbringen, wobei es nicht wie in Fig. 1 als separate Ventileinheit ausgebildet ist.

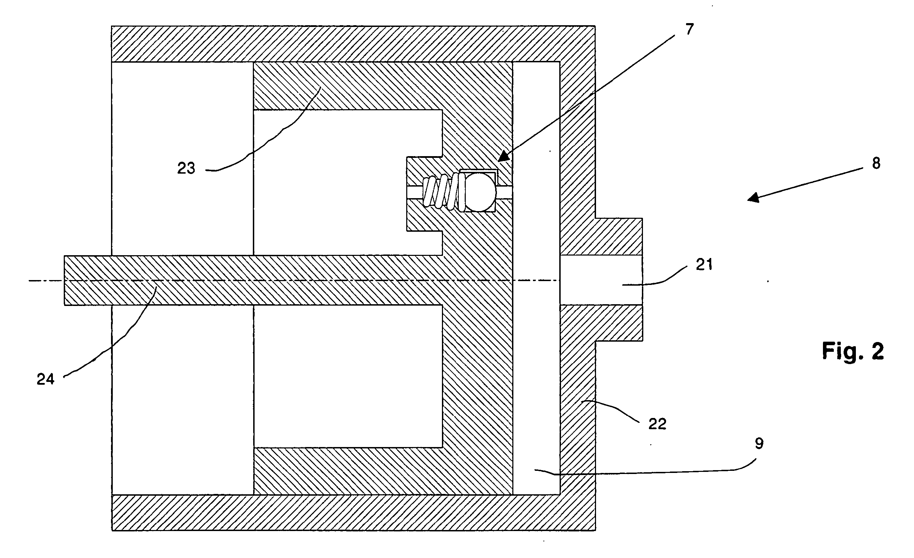

So kann das Rückschlagventil (7) auch im federbelasteten Stellzylinder (8) angeordnet werden, was vorteilhaft ist, weil die separate Anbringung eines Rückschlagventils entfällt und auch keine separate Verrohrung vorgenommen werden muß. Entsprechend Fig. 2 ist das Rückschlagventil innerhalb des Kolbens (23) des federbelasteten Stellzylinders (8) angebracht. In dieser Darstellung ist auch die Kolbenstange (24) gezeigt; die Zylinder-Rückstellfeder ist aus Übersichtsgründen nicht eingezeichnet; sie wird im Innenraum des Kolbens (23) angeordnet.

Gegebenenfalls ist es möglich, auf eine Rückstellfeder im Stellzylinder (8) zu verzichten, nämlich in Anwendungsfällen, bei denen eine Rückstellfeder in der vom Stellzylinder (8) betätigten Einrichtung selbst untergebracht ist [z. B. ist dies zumindest bei einigen Ausführungsformen der eingangs erwähnten Fahrzeugkupplungen der Fall]. Außerdem kann ein Stellzylinder im Gegensatz zur Ausführungsform eines einfachwirkenden Stellzylinders (8) auch als doppeltwirkender Stellzylinder vorgesehen sein, bei dem neben dem Kolbenraum (9) zum Ausfahren der Kolbenstange (24) ein weiterer Kolbenraum zum Einfahren der Kolbenstange (24) vorgesehen ist. Für diesen weiteren Kolbenraum sind dann ebenfalls Ventile zum Druckauf- und Druckabbau vorgesehen.

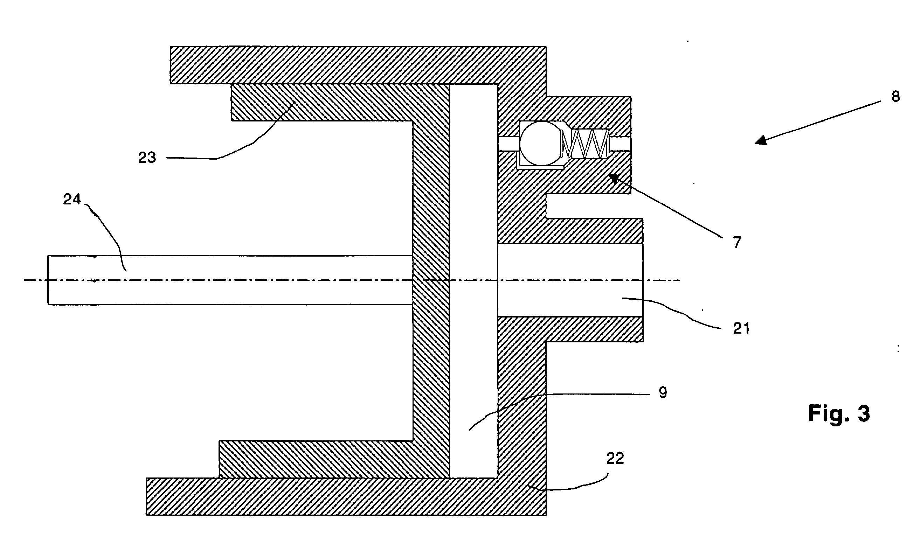

Alternativ zu Fig. 2 läßt sich das Rückschlagventil (7) auch im Gehäuse des federbelasteten Stellzylinders (8) anbringen, und zwar in der Stirnwand (22) dieses Gehäuses [Fig. 3].

Es besteht auch die Möglichkeit, das Rückschlagventil (7) in mindestens einem der beiden magnetbetätigten Wegeventile (1) oder (4) anzuordnen [statt einem Rückschlagventil (7) können nämlich an den erläuterten Einrichtungen der Schaltung nach Fig. 1 auch zwei derartige Rückschlagventile angeordnet sein]. Dies ist in Fig. 4 am Beispiel des Entlüftungsventils (4) gezeigt.

Das Entlüftungsventil (4) besteht aus einem ersten Gehäuseteil (26) und einem zweiten Gehäuseteil (27), welcher mit dem ersten Gehäuseteil verbunden ist. Im ersten Gehäuseteil ist das Ankerführungsrohr (32) mit der Magnetspule (31) angeordnet, und die O-Ring-Dichtung (33) bewirkt, daß der mit dem Stellzylinder-Anschluß (21) pneumatisch verbundene zweite Anschluß (6) des Entlüftungsventils auch gegenüber dem Ankerführungsrohr (32) und damit gegenüber dem ersten Gehäuseteil (26) abgedichtet ist.

Im Inneren des Ankerführungsrohrs (32) ist der Magnetanker (29) verschieblich gelagert; bei nicht bestromter Magnetspule (31) ist er über eine im unten erläuterten Ventil-Druckraum (35) angeordnete, aber in dieser Darstellung aus Übersichtsgründen nicht gezeigte, Feder in Richtung des zweiten Gehäuseteils (27) verschoben, und zwar derart, daß das Magnetanker-Dichtelement (30) am Dichtsitz (28) des zweiten Gehäuseteils federnd aufliegt und damit dieser Dichtsitz bei nicht betätigtem Magneten geschlossen ist [beim gleichartig aufgebauten Belüftungsventil (1) kann sich aufgrund von Undichtigkeiten von der Versorgung (10) über diesen Dichtsitz ein geringer Leckage-Luftstrom zum Stellzylinder-Kolbenraum (9) ausbilden].

Bei bestromter Magnetspule (31) wird der Magnetanker (29) in Richtung des feststehenden Kerns (37) angehoben, das Magnetanker-Dichtelement (30) hebt vom Dichtsitz (28) ab, und der mit der Entlüftung (11) verbundene erste Anschluß (5) des Entlüftungsventils (4) ist pneumatisch mit dem Stellzylinder-Kolbenraum (9) verbunden, wodurch eine Entlüftung des Kolbenraums erfolgt. Im feststehenden Kern (37) ist das erfindungsgemäße Rückschlagventil (7) angeordnet, und zwar so, daß zwischen diesem Ventil und dem Magnetanker (29) der oben bereits angedeutete Ventil-Druckraum (35) gebildet ist.

Der Ventil-Druckraum (35) ist über einen Druckkanal (34) im Magnetanker (29) mit dem zweiten Anschluß (6) des Entlüftungsventils (4) verbunden: Dieser Druckraum steht daher, unabhängig von der Schaltstellung des Entlüftungsventils (4), immer pneumatisch mit dem Stellzylinder-Kolbenraum (9) in Verbindung. Eine Entlüftung des Ventil-Druckraums (35) ist damit gleichbedeutend mit einer Entlüftung des Stellzylinder-Kolbenraums (9) selbst.

Wie bereits erwähnt, ist das Belüftungsventil (1) identisch zum Entlüftungsventil (4) aufgebaut, mit dem Unterschied, daß der erste Anschluß [dort (2)] nicht mit der Entlüftung (11), sondern mit dem Versorgungsdruck (10) verbunden ist. Der zweite Anschluß [dort (3)] ist jedoch genau wie beim Entlüftungsventil (4) mit dem Stellzylinder-Kolbenraum (9) verbunden, so daß über einem Kolben-Druckraum (35) des Belüftungsventils (1) ebenfalls ein Rückschlagventil (7) angeordnet werden kann, welches zur Entlüftung des Stellzylinder-Kolbenraums (9) dient.

Bei der Ausführungsform des Rückschlagventils (7) nach Fig. 1a/Fig. 1b bildet die Dicht-Kugel (13) am ersten Dichtsitz (17) eine kreisrunde umlaufende Dichtkante, die als solche als hermetisch dichtenden Dichtkante wirkt; die definierte Undichtigkeit wird, wie erläutert, durch den Querschnitt des Nut-Radialabschnittes (36) in der umlaufenden Dichtkante bewirkt.

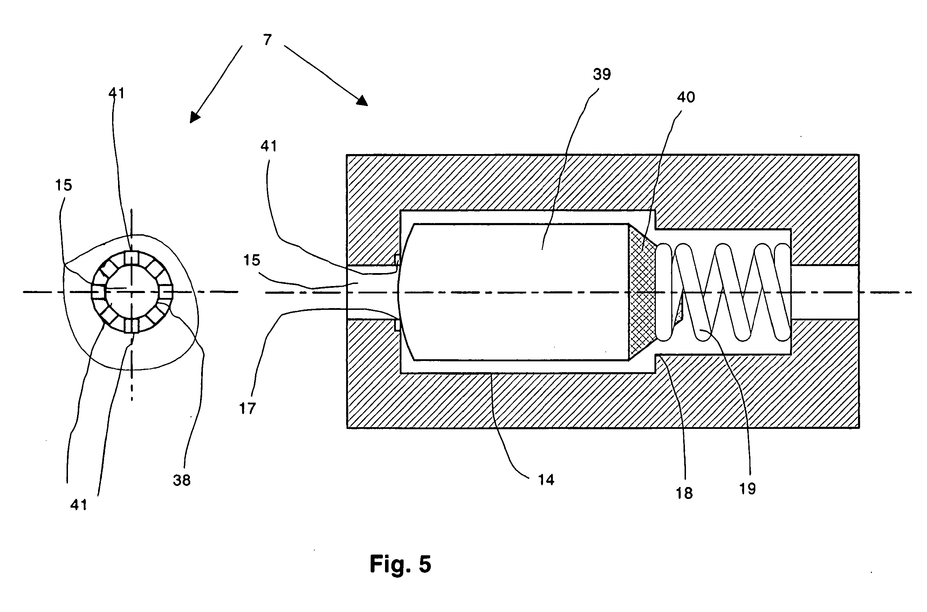

Wie in Fig. 5 gezeigt, kann die definierte Undichtigkeit auch durch eine konstruktiv bedingte Undichtigkeit an der umlaufenden Dichtkante (38) des ersten Ventilsitzes (17) festgelegt werden.

Besonders deutlich ist dort in der seitlichen Ansicht zu erkennen, wie in dem Ventilgehäuse am ersten Ventilsitz (17) umlaufend Einkerbungen (41) vorgesehen sind, welche die definierte Undichtigkeit bestimmen [im gezeigten Beispiel sind es acht Einkerbungen (41)].

Das Rückschlagventil (7) nach Fig. 5 zeigt auch weitere unterschiedliche Ausgestaltungsvarianten zum Rückschlagventil (7) nach Fig. 1a/Fig. 1b. So ist statt einer Kugel ein rotationssymmetrischer Dicht-Körper (39) vorgesehen, der in der kreiszylindrischen Führung (14) mit einem bestimmten Spiel [in Fig. 5 in stark übertriebener Darstellung] gelagert ist, welches die Leckagefunktion des Nut-Längsabschnittes (16) aus Fig. 1a/Fig. 1b erfüllt.

Außerdem ist der zweite Dichtsitz (18) nicht als metallisch dichtender Sitz sondern als Elastomer-Dichtsitz ausgebildet, wozu am Dicht-Körper (39) ein Elastomer-Dichtkonus (40) vorgesehen ist; diese Ausführungsform ist besonders wegen ihrer hermetischen und "federnden" Dichtwirkung vorteilhaft. Ergänzt sei, daß der Dicht-Körper auch in anderer Form ausgebildet sein kann, z. B. als rotationssymmetrisches Bauteil in Torpedo- oder Ei-Form.

## Patentansprüche

1. Ventileinrichtung zur Be- bzw. Entlüftung des Kolbenraums eines Stellzylinders mit folgenden Merkmalen:
a) Es ist mindestens ein als magnetbetätigtes Wegeventil ausgebildetes Belütftungsventil (1) vorgesehen, bei dem ein erster Anschluß mit dem Versorgungsdruck (10) und ein ein zweiter Anschluß mit dem Stellzylinder-Kolbenraum (9) verbindbar ist;
b) es ist mindestens ein als magnetbetätigtes Wegeventil ausgebildetes Entlüftungsventil (4) vorgesehen, bei dem ein erster Anschluß mit der Entlüftung (11) und ein zweiter Anschluß mit dem Stellzylinder-Kolbenraum (9) verbindbar ist;
c) sowohl das mindestens eine Belüftungsventil als auch das mindestens eine Entlüftungsventil sind als stromlos geschlossene Ventile ausgebildet;
**gekennzeichnet durch** die folgenden Merkmale:
d) es ist mindestens ein Rückschlagventil (7) vorgesehen, dessen pneumatischer Eingang (12) mit dem Stellzylinder-Kolbenraum verbindbar ist;
e) das mindestens eine Rückschlagventil verfügt über zwei Stellungen, eine unbetätigte und eine betätigte Stellung;
f) die unbetätigte Stellung ist bei drucklosem pneumatischen Eingang eingenommen;
g) die betätigte Stellung ist bei druckbeaufschlagtem pneumatischen Eingang eingenommen;
h) das mindestens eine Rückschlagventilverfügt in seiner unbetätigten Stellung über eine definierte Undichtigkeit.

2. Ventileinrichtung nach Anspruch 1, **dadurch gekennzeichnet, daß** die Undichtigkeit als Nennweite festgelegt ist, die in einem vorgegebenen Verhältnis zur Nennweite des mindestens einen Belüftungsventils steht.

3. Ventileinrichtung nach mindestens einem der Ansprüche 1 bis 2, **dadurch gekennzeichnet daß** das mindestens eine Rückschlagventil im Stellzylinder anordenbar ist.

4. Ventileinrichtung nach Anspruch 3, **dadurch gekennzeichnet, daß** das mindestens eine Rückschlagventil im Kolben des Stellzylinders anordenbar ist.

5. Ventileinrichtung nach Anspruch 3, **dadurch gekennzeichnet, daß** das mindestens eine Rückschlagventil im Gehäuse des Stellzylinders anordenbar ist.

6. Ventileinrichtung nach Anspruch 5, **dadurch gekennzeichnet, daß** das mindestens eine Rückschlagventil in der Stirnwand des Gehäuses des Stellzylinders anordenbar ist.

7. Ventileinrichtung nach mindestens einem der Ansprüche 1 bis 2, **dadurch gekennzeichnet, daß** das mindestens eine Rückschlagventil in mindestens einem der magnetbetätigten Wegeventile angeordnet ist.

8. Ventileinrichtung nach Anspruch 7, **dadurch gekennzeichnet, daß** das mindestens eine Rückschlagventil im Entlüftungsventil angeordnet ist.

9. Ventileinrichtung nach Anspruch 7, **dadurch gekennzeichnet, daß** das mindestens eine Rückschlagventil im Belüftungsventil angeordnet ist.

10. Ventileinrichtung nach einem der vorstehenden Ansprüche, **dadurch gekennzeichnet, daß** das mindestens eine magnetbetätigte Belüftungsventil und das mindestens eine magnetbetätigte Entlüftungsventil über mindestens 2/2-Wege verfügen.

11. Ventileinrichtung nach mindestens einem der vorstehenden Ansprüche, **gekennzeichnet durch** die folgenden Merkmale:
a) das Schaltelement des Rückschlagventils ist als mit der Kraft einer Feder belasteter Dicht-Körper ausgebildet, der in einer kreiszylindrischen Führung gelagert ist;
b) in der unbetätigten Stellung des Rückschlagventils ist der Dicht-Körper über die Kraft der Feder an einen ersten Dichtsitz am pneumatischen Eingang des Ventils angelegt;
c) in der betätigten Stellung des Rückschlagventils ist der Dicht-Körper über die am pneumatischen Eingang des Ventils anliegende Druckkraft an einen zweiten Dichtsitz an einer Ventilentlüftung dichtend angelegt.
d) die definierte Undichtigkeit ist am ersten Dichtsitz als konstruktiv bedingte Undichtigkeit ausgebildet.

12. Ausrückmechanismus für die Kupplung eines Kraftfahrzeuges umfassend einen Stellzylinder sowie eine Ventileinrichtung nach mindestens einem der vorhergehenden Ansprüche zur Druckbeaufschlagung des Stellzylinders.

## Claims

1. Valve device for admitting air to or venting air from the piston chamber of an actuating cylinder, having the following features:
a) at least one air-admission valve (1) in the form of an electromagnetically operated directional control valve is provided, in which a first connection is connectible to the supply pressure (10) and a second connection is connectible to the actuating cylinder piston chamber (9);
b) at least one air-venting valve (4) in the form of an electromagnetically operated directional control valve is provided, in which a first connection is connectible to the air-venting means (11) and a second connection is connectible to the actuating cylinder piston chamber (9);
c) both the at least one air-admission valve and the at least one air-venting valve are in the form of valves that are closed when deenergized;
**characterized by** the following features:
d) at least one non-return valve (7) is provided, the pneumatic inlet (12) of which is connectible to the actuating cylinder piston chamber;
e) the at least one non-return valve has two positions, a non-actuated position and an actuated position;
f) the non-actuated position is assumed when the pneumatic inlet is without pressure;
g) the actuated position is assumed when the pneumatic inlet is supplied with pressure;
h) the at least one non-return valve has, in its non-actuated position, a defined leakage.

2. Valve device according to claim 1, **characterized in that** the leakage is set as a nominal diameter which is in a predetermined ratio relative to the nominal diameter of the at least one air-admission valve.

3. Valve device according to at least one of claims 1 and 2, **characterized in that** the at least one non-return valve is arrangeable in the actuating cylinder.

4. Valve device according to claim 3, **characterized in that** the at least one non-return valve is arrangeable in the piston of the actuating cylinder.

5. Valve device according to claim 3, **characterized in that** the at least one non-return valve is arrangeable in the housing of the actuating cylinder.

6. Valve device according to claim 5, **characterized in that** the at least one non-return valve is arrangeable in the end wall of the housing of the actuating cylinder.

7. Valve device according to at least one of claims 1 and 2, **characterized in that** the at least one non-return valve is arranged in at least one of the electromagnetically operated directional control valves.

8. Valve device according to claim 7, **characterized in that** the at least one non-return valve is arranged in the air-venting valve.

9. Valve device according to claim 7, **characterized in that** the at least one non-return valve is arranged in the air-admission valve.

10. Valve device according to any one of the preceding claims, **characterized in that** the at least one electromagnetically operated air-admission valve and the at least one electromagnetically operated air-venting valve are at least 2/2-way.

11. Valve device according to at least one of the preceding claims, **characterized by** the following features:
a) the switching element of the non-return valve is in the form of a sealing body loaded by the force of a spring, which sealing body is mounted in a circular-cylindrical guide;
b) in the non-actuated position of the non-return valve, the sealing body is applied, by means of the force of the spring, to a first sealing seat at the pneumatic inlet of the valve;
c) in the actuated position of the non-return valve, the sealing body is sealingly applied, by means of the pressure force acting at the pneumatic inlet of the valve, to a second sealing seat on a valve air-venting means;
d) the defined leakage is in the form of a structure-related leakage at the first sealing seat.

12. Disengagement mechanism for the clutch of a motor vehicle, comprising an actuating cylinder and a valve device according to at least one of the preceding claims for supplying pressure to the actuating cylinder.

## Revendications

1. Agencement de valve pour la mise à l'air ou la purge d'une chambre à piston d'un vérin de positionnement, présentant les éléments suivants :
a) il est prévu au moins une valve de mise à l'air (1) réalisée sous la forme d'un distributeur à actionnement magnétique, dans laquelle un premier raccord est susceptible d'être relié à la pression d'alimentation (10) et un second raccord est susceptible d'être relié à la chambre à piston (9) de vérin de positionnement ;
b) il est prévu au moins une valve de purge (4) réalisée sous la forme d'un distributeur à actionnement magnétique, dans laquelle un premier raccord est susceptible d'être relié au conduit de purge (11) et un second raccord est susceptible d'être relié à la chambre à piston (9) de vérin de positionnement ;
c) aussi bien ladite au moins une valve de mise à l'air que ladite au moins une valve de purge sont réalisées sous la forme de valves fermées dans l'état sans courant ;
**caractérisé par** les autres éléments suivants :
d) il est prévu au moins un clapet antiretour (7) dont l'entrée pneumatique (12) est susceptible d'être reliée à la chambre à piston de vérin de positionnement ;
e) ledit au moins un clapet antiretour dispose de deux positions que sont une position non actionnée et une position actionnée ;
f) la position non actionnée est occupée lorsque l'entrée pneumatique est à l'état sans pression ;
g) la position actionnée est occupée lorsque l'entrée pneumatique est alimentée en pression ;
h) ledit au moins un clapet antiretour dispose d'une non-étanchéité définie dans sa position non actionnée.

2. Agencement de valve selon la revendication 1, **caractérisé en ce que** la non-étanchéité est définie comme une ouverture nominale qui est dans une relation prédéterminée par rapport à l'ouverture nominale de ladite au moins une valve de mise à l'air.

3. Agencement de valve selon l'une des revendications 1 et 2, **caractérisé en ce que** ledit au moins un clapet antiretour est susceptible d'être agencé dans le vérin de positionnement.

4. Agencement de valve selon la revendication 3, **caractérisé en ce que** ledit au moins un clapet antiretour est susceptible d'être agencé dans le piston du vérin de positionnement.

5. Agencement de valve selon la revendication 3, **caractérisé en ce que** ledit au moins un clapet antiretour est susceptible d'être agencé dans le boîtier du vérin de positionnement.

6. Agencement de valve selon la revendication 5, **caractérisé en ce que** ledit au moins un clapet antiretour est susceptible d'être agencé dans la paroi frontale du boîtier du vérin de positionnement.

7. Agencement de valve selon l'une des revendications 1 et 2, **caractérisé en ce que** ledit au moins un clapet antiretour est agencé dans l'un au moins des distributeurs à actionnement magnétique.

8. Agencement de valve selon la revendication 7, **caractérisé en ce que** ledit au moins un clapet antiretour est agencé dans la valve de purge.

9. Agencement de valve selon la revendication 7, **caractérisé en ce que** ledit au moins un clapet antiretour est agencé dans la valve de mise à l'air.

10. Agencement de valve selon l'une des revendications précédentes, **caractérisé en ce que** ladite au moins une valve de mise à l'air à actionnement magnétique et ladite au moins une valve de purge à actionnement magnétique disposent au moins de 2 voies/2 positions.

11. Agencement de valve selon l'une des revendications précédentes, **caractérisé par** les éléments suivants :
a) l'élément de commutation du clapet antiretour est réalisé sous la forme d'un corps d'étanchéité chargé par la force d'un ressort, corps qui est monté dans un guidage cylindrique à base circulaire ;
b) dans la position non actionnée du clapet antiretour, le corps d'étanchéité est appliqué contre un premier siège d'étanchéité à l'entrée pneumatique de la valve, par la force du ressort ;
c) dans la position actionnée du clapet antiretour, le corps d'étanchéité est appliqué avec étanchement contre un second siège d'étanchéité sur un conduit de purge de valve, par la force de pression appliquée à l'entrée pneumatique de la valve ;
d) la non-étanchéité définie est réalisée sur le premier siège d'étanchéité à titre de non-étanchéité due à des paramètres de construction.

12. Mécanisme de débrayage pour l'embrayage d'un véhicule automobile, comprenant un vérin de positionnement ainsi qu'un agencement de valve selon l'une des revendications précédentes pour l'alimentation en pression du vérin de positionnement.
